# FASCICULE DE BREVET EUROPEEN

(11) **EP 2 886 395 B1**
(45) Date de publication et mention de la délivrance du brevet: **22.02.2017**
(21) Numéro de dépôt: 14198681.0
(22) Date de dépôt: 17.12.2014
(51) Int. Cl.: B60R 5/04

(54) **Dispositif de masquage arrière de vehicule automobile, et procédé de stockage associé**
Hintere Maskierungseinrichtung des Autos und ein zugehöriges Verfahren zum Speichern dieselbe
Rear masking device of car and associated method for storing the same

(30) Priorité: 23.12.2013 FR 1363481
(43) Date de publication de la demande: 24.06.2015
(73) Titulaire: Faurecia Automotive Industrie, 92000 Nanterre (FR)
(72) Inventeur: Bryl, Bruno, 08000 La Francheville (FR)
(74) Mandataire: Lavoix

(56) Documents cités:
- EP-A1- 0 203 824
- DE-A1- 2 659 684
- DE-A1- 19 605 406

## Description

La présente invention concerne un dispositif de masquage arrière de véhicule automobile selon le préambule de la revendication 1.

Le document DE 26 59 684 A1 décrit un dispositif de masquage du type précité.

Un tel dispositif est destiné à être monté dans le coffre d'un véhicule automobile pour masquer le contenu de la partie inférieure du coffre, tout en offrant une surface de support pour des objets destinés à être posés sur l'organe de support d'objets.

De manière connue, l'organe de support d'objets d'un tel dispositif est par exemple une tablette montée pivotante autour d'un axe transversal du véhicule automobile. Des liens souples raccordent une surface arrière de la tablette au hayon du véhicule automobile pour provoquer le soulèvement de la tablette lors de l'ouverture du hayon.

Lorsque la tablette est en cours de fabrication, avant son montage dans le véhicule, ou lorsqu'elle est démontée, les liens sont libres. Ils sont donc susceptibles de s'accrocher sur un élément extérieur, de s'entremêler entre eux, etc. Ils peuvent donc se montrer gênants pour le fabricant de la tablette ou pour l'utilisateur final.

Pour pallier ce problème, KR 20050054248, décrit un dispositif muni d'un moyen d'enroulement du lien autour d'une poulie. La poulie est fixée sur la tablette.

Un tel dispositif ne donne pas entière satisfaction. En effet, les moyens d'enroulement utilisés dans ce dispositif sortent du volume de la tablette de manière peu esthétique et encombrante. De plus ils peuvent être difficiles à utiliser.

En outre, lorsque les tablettes sont produites en série, des précautions importantes doivent être prises pour empiler les tablettes les unes sur les autres, afin d'éviter que le dispositif d'enroulement d'une tablette abime la surface supérieure d'une autre tablette sur laquelle elle est empilée.

Un but de l'invention est d'obtenir un dispositif de masquage arrière de véhicule automobile qui permette une production et un stockage en grandes séries, tout en étant pratique pour l'utilisateur.

A cet effet, l'invention a pour objet un dispositif selon la revendication 1.

Le dispositif selon l'invention peut comprendre l'une ou plusieurs des caractéristiques des revendications 2 à 11 ou la caractéristique suivante, prise(s) isolément ou suivant toutes combinaisons techniquement possibles :
- l'organe de support d'objets est une tablette destinée à être placée à l'écart du plancher du véhicule, l'extrémité libre du lien étant destinée à être attachée à un élément du véhicule.

L'invention a également pour objet un procédé de stockage selon la revendication 12.

Le procédé de stockage selon l'invention peut comprendre l'une ou plusieurs des caractéristiques des revendications 13 et 14, prise(s) isolément ou suivant toutes combinaisons techniquement possibles.

L'invention sera mieux comprise à la lecture de la description qui va suivre, donnée uniquement à titre d'exemple, et faite en se référant aux dessins annexés, sur lesquels :
- la figure 1 est une vue schématique de dessus d'un premier dispositif selon l'invention ;
- la figure 2 est une vue schématique en coupe suivant un plan vertical passant par l'axe principale de la rainure du dispositif de la figure 1 ;
- la figure 3 est une vue schématique analogue à la figure 2 d'un deuxième dispositif selon l'invention ;
- la figure 4 est une vue schématique en coupe suivant un plan vertical perpendiculaire à l'axe principale de la rainure du dispositif de la figure 1 ;
- la figure 5 est une vue schématique analogue à la figure 4 d'un troisième dispositif selon l'invention lors d'une première étape de rangement du lien ;
- la figure 6 est une vue schématique analogue à la figure 5 du troisième dispositif selon l'invention lors d'une seconde étape de rangement du lien ;
- la figure 7 est une vue schématique analogue à la figure 1 d'un quatrième dispositif selon l'invention ;
- la figure 8 est une vue schématique analogue à la figure 2 d'un cinquième dispositif selon l'invention dans une position de repos ;
- la figure 9 est une vue schématique analogue à la figure 2 du cinquième dispositif dans une position d'utilisation ;
- la figure 10 est une vue schématique de dessous du cinquième dispositif dans une position de repos analogue à la figure 8.

Dans tout ce qui suit, les orientations sont les orientations habituelles d'un véhicule automobile. Ainsi, les termes « supérieur », « inférieur », « gauche », « droit », « haut » bas » s'entendent par rapport au sens normal de circulation d'un véhicule automobile et rapport à la position d'un conducteur.

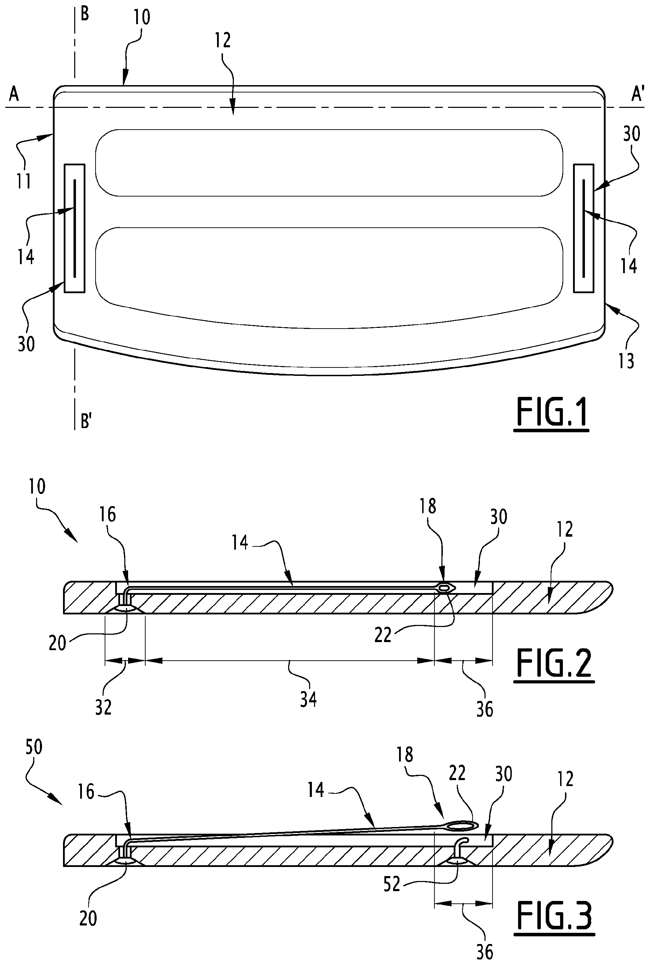

Les figures 1, 2 et 4 illustrent un premier dispositif de masquage 10 de véhicule automobile suivant l'invention.

Le dispositif de masquage 10 est destiné à être installé dans le coffre arrière d'un véhicule automobile. Le coffre est un espace délimité généralement vers l'avant par des sièges du véhicule, sur les côtés par des garnitures latérales, vers le bas par un plancher, et vers l'arrière par un hayon articulé sur la carrosserie du véhicule automobile entre une position fermée d'obturation du coffre et une position ouverte d'accès au coffre.

Le dispositif de masquage 10 comporte un organe de support d'objets qui, dans cet exemple est une tablette 12 destinée à obturer une partie inférieure du coffre et à supporter des objets sur sa surface supérieure. Les objets supportés par la tablette peuvent présenter une masse significative, par exemple supérieure à 100 g.

On appelle surface supérieure, la surface de la tablette 12 qui est tournée vers le haut lorsque le dispositif 10 est monté dans le véhicule coffre fermé.

Le dispositif de masquage 10 comporte en outre au moins un lien 14. Ce lien 14 est destiné à rattacher la tablette 12 au hayon du véhicule lorsque le dispositif 10 est monté dans le coffre. Le lien 14 est par exemple choisi parmi un cordon, une sangle, une tige métallique, une chainette.

Comme illustré par la figure 1, la tablette 12 s'étend transversalement entre un bord latéral gauche 11 et un bord latéral droit 13 destiné à se placer respectivement le long des garnitures latérales. Elle s'étend longitudinalement entre un bord avant et un bord arrière.

La tablette 12 est monté rotative dans les garnitures latérales autour d'un axe transversal A-A', entre une position horizontale de repos et une position inclinée, soulevée vers le haut.

Dans cet exemple chaque lien 14 est formé par un cordon souple de tablette. Le diamètre du cordon constitue son épaisseur et sa largeur. Dans une variante, le lien 14 est une sangle.

Le lien 14 présente par exemple une dimension transversale maximale comprise entre 1 mm et 20 mm, et une longueur comprise entre 10 et 50 cm.

Le lien 14 comporte une extrémité de retenue 16, une région centrale et une extrémité libre 18. L'extrémité de retenue 16 du lien 14 est raccordée à la tablette 12 par un embout de fixation 20. Dans cet exemple, l'extrémité de retenue 16 est fixée en permanence à la tablette 12 par l'embout de fixation 20.

L'extrémité de retenue 16 du lien 14 est par exemple fixée sur la tablette 12 par l'intermédiaire d'une ancre telle que décrite dans FR 2 974 047.

L'extrémité libre 18 du lien 14 comporte un élément d'accrochage 22 au hayon du véhicule. Dans l'exemple, l'élément d'accrochage 22 est formé par une boucle d'accroche.

Le hayon du véhicule (non représenté) comporte une accroche complémentaire (non représentée) apte à recevoir l'élément d'accrochage 22 du lien 14.

Selon l'invention, la tablette 12 définit au moins une rainure 30. Chaque rainure 30 est définie dans la surface supérieure de la tablette 12, avantageusement le long d'un bord longitudinal de la tablette 12.

Dans cet exemple, la tablette 12 définit, pour chaque lien 14, une rainure 30 de réception du lien 14. La tablette 12 présente donc une rainure 30 située le long de son bord gauche et une rainure 30 située le long de son bord droit.

Chaque rainure 30 est allongée suivant un axe principal parallèle à l'axe longitudinal du véhicule.

La largeur de la rainure 30 est inférieure à sa longueur.

La profondeur de la rainure 30 est inférieure à l'épaisseur de la tablette 12 et est supérieure à la dimension transversale maximale du lien 14.

La rainure 30 présente une profondeur suffisante pour que l'embout de fixation 20 et l'élément d'accrochage 22 soient totalement reçus dans la rainure 30, sans faire saillie au-delà de la surface supérieure de la tablette 12.

La forme de la rainure 30 est complémentaire à la forme du lien 14.

Avantageusement, la profondeur de la rainure est comprise 2 mm et 40 mm.

La section de la rainure 30 selon le plan vertical perpendiculaire à l'axe principal de la rainure présente par exemple un contour polygonal, notamment en forme de rectangle, de carrée, ou un contour arrondi

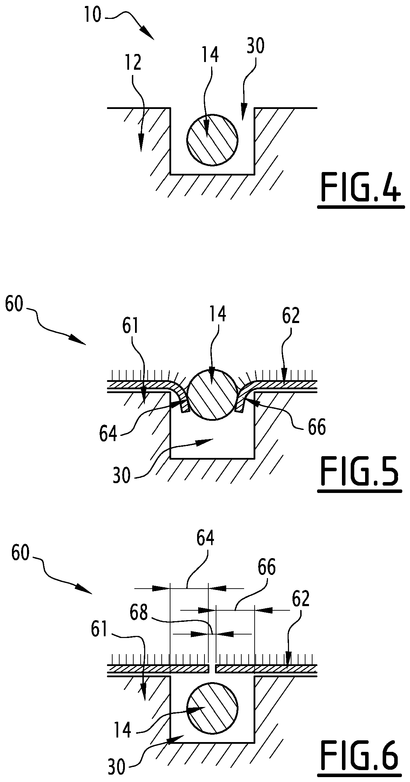

Dans cet exemple, la tablette 12 définit deux rainures 30 parallèles. La section de chaque rainure 30 est de forme rectangulaire, comme l'illustre la figure 4.

En se déplaçant depuis l'arrière vers l'avant, la rainure 30 comporte une zone de retenue 32 dans laquelle est disposée l'extrémité de retenue 16 du lien 14, une zone centrale 34 adjacente à la zone de retenue 32, destinée à recevoir une région centrale du lien 14 et une zone d'extrémité 36 adjacente à la zone centrale 34, destinée à recevoir l'élément d'accrochage 22.

La zone de retenue 32 de la rainure 30 reçoit l'extrémité de retenue 16 du lien 14 et son embout de fixation 20.

La zone d'extrémité 36 est située à une distance de la zone de retenue 32 qui est sensiblement égale à la longueur du lien 14.

Ainsi, lorsque l'extrémité libre 18 du lien 14 est placée dans la zone d'extrémité 36 de la rainure 30, le lien 14 est totalement reçu dans la rainure 30.

Le lien 14 est déplaçable entre une position de repos dans laquelle il est reçu dans la rainure 30 et une position d'utilisation où la région centrale du lien et l'élément d'accrochage 22 font saillie hors de la rainure 30 au-delà de la surface supérieure de la tablette 12.

Lorsque le lien 14 est reçu dans la rainure 30, aucune partie du lien 14 ne fait saillie hors de la rainure 30 au-delà de la surface de la tablette 12.

Lors de la fabrication de la tablette 12, l'extrémité de retenue 16 de chaque lien 14 est rapportée sur la tablette 12, par l'intermédiaire de l'embout de fixation 20.

Ensuite, le lien 14 est introduit totalement dans la rainure 30, jusqu'à son extrémité libre 18, avec l'élément d'accrochage 22.

Le lien 14 ne dépasse pas hors de la rainure 30, ce qui permet de manipuler la tablette 12, sans risquer d'emmêler ou d'accrocher le lien 14 sur un élément extérieur.

La tablette 12 est ainsi apte à être empilée sur d'autres tablettes 12 du même type, en vue d'un conditionnement et/ou d'un transport vers une unité de production de véhicules.

Lorsque la tablette 12 est montée dans le véhicule, un opérateur ou un robot saisit l'élément d'accrochage 22 à l'extrémité libre 18 du lien 14 et l'extrait hors de la rainure 30. Il fixe l'élément d'accrochage 22 sur l'accroche complémentaire du hayon.

La fermeture du hayon provoque alors le déplacement de la tablette 12 vers sa position horizontale, et l'ouverture ultérieure du hayon soulève la tablette 12 vers sa position inclinée, par l'intermédiaire du lien 14.

Lorsque l'utilisateur du véhicule souhaite retirer la tablette 12, il place à nouveau chaque lien 14 dans la rainure 30, ce qui est pratique et esthétique.

La figure 3 illustre un second dispositif 50 de masquage de véhicule automobile suivant l'invention. Ce dispositif diffère du dispositif 10 en ce qu'il comporte un dispositif de maintien 52 du lien 14 en position.

Le dispositif de maintien 52 est disposé dans la zone d'extrémité 36 de la rainure 30. Ce dispositif de maintien 52 ne fait pas saillie hors de la rainure 30.

Le dispositif de maintien 52 est disposé dans la zone d'extrémité 36 de la rainure à une distance de la zone de fixation 32 supérieure ou égale à la longueur du lien 14. Lorsque l'extrémité libre 18 du lien 14 est bloquée par le dispositif de maintien 52, le lien 14 est tendu au sein de la rainure 30.

Ainsi, lorsque l'extrémité libre 18 est maintenue dans la zone d'extrémité 36 de la rainure, la tablette 12 est apte à être retournée sans qu'aucune partie du lien 14 ne sorte de la rainure 30 par rapport à la surface supérieure de la tablette 12.

Dans cet exemple, le dispositif de maintien 52 comporte un pion d'accroche totalement reçu dans la rainure 30.

L'élément d'accrochage 22 situé à l'extrémité libre 18 du lien 14 est une boucle. Dans une configuration de rangement (non représentée), la boucle de l'élément d'accrochage 22 est engagée sur le pion et est maintenue fixe dans la rainure 30.

Avantageusement, le pion présente une extrémité en forme de crochet pour retenir la boucle. Dans une variante, le crochet est élastique afin de faciliter le blocage de la boucle de l'élément d'accrochage 22 et sa libération. Dans une autre variante le crochet est rigide et l'élasticité du lien 14 permet le blocage de l'élément d'accrochage et sa libération.

Dans un autre mode de réalisation, le dispositif diffère des modes de réalisations précédemment décrits en ce que l'extrémité libre 18 du lien comporte un embout d'extrémité. Il diffère également en ce que le dispositif de maintien 52 est formé par un étranglement défini dans la rainure 30 dans la zone d'extrémité 36.

La largeur de la rainure 30 dans l'étranglement autorise l'insertion du lien 14 avec l'embout d'extrémité, mais bloque par coincement l'embout d'extrémité et le lien 14.

Les figures 5 et 6 illustrent un autre dispositif de masquage 60 de véhicule automobile suivant l'invention. Dans ce dispositif 60, la tablette 12 comporte un corps de base 61 définissant chaque rainure 30 et un revêtement supérieur 62 assemblé sur la surface supérieure du corps de base 61.

Le revêtement supérieur 62 est fixé sur le corps de base 61 à l'écart de la rainure 30. Il comporte par exemple une moquette de parement.

Le revêtement supérieur 62 couvre partiellement la rainure 30. Il définit un élément de protection et de masquage du lien 14 situé en regard d'une partie de la rainure 30.

L'élément de protection en regard de la rainure 30 comporte deux lèvres latérales 64, 66 séparées par une ouverture 68. La zone d'extrémité 36 de la rainure 30 n'est pas recouverte par l'élément de protection.

L'ouverture 68 est par exemple une fente. L'ouverture 68 est configurée pour autoriser l'introduction du lien 14 dans la rainure 30 et son extraction hors de la rainure 30.

L'ouverture 68 est allongée longitudinalement, le long de la rainure 30. La largeur de l'ouverture 68 est inférieure à la largeur de la rainure 30 et à la largeur du lien 14. Elle débouche à au moins une extrémité, notamment en regard de la zone d'extrémité 36 de la rainure 30.

Les lèvres 64, 66 sont aptes à se déformer pour l'introduction du lien 14 dans la rainure 30 lors d'une étape de rangement du lien 14, depuis une configuration sensiblement plane, sensiblement horizontale, vers une configuration déformée d'introduction du lien 14 comme l'illustre la figure 5.

Les lèvres 64, 66 se repositionnent spontanément dans leur configuration plane, une fois le lien 14 en place dans la rainure 30, comme l'illustre la figure 6.

La région centrale du lien 14 est alors maintenue dans la rainure 30 par les lèvres 64, 66 de l'élément de protection. Si la tablette 12 est retournée, aucune partie du lien 14 ou ses extrémités 16, 18 ne font saillie hors de la rainure 30 par rapport à la surface supérieure de la tablette 12.

La zone d'extrémité 36 de la rainure 30 n'étant pas recouverte par l'élément de protection, il est possible de prendre en main, l'extrémité libre 18 du lien 14 afin d'extraire le lien 14 hors de la rainure 30.

Un dispositif selon l'invention est fabriqué en formant directement le corps de base 61 avec des rainures 30, par exemple par thermoformage.

Le revêtement supérieur 62 est assemblé sur la surface supérieure du corps de base 61. Il est fendu en regard de chaque rainure, avantageusement après sa mise en place sur le corps de base 61.

Un mode d'utilisation de l'invention consiste à ranger les liens 14 et les extrémités 18 dans les rainures 30, et à les bloquer par un dispositif de maintien 52, puis à déplacer le dispositif de masquage 60 sans que les liens 14 ne fassent saillie hors de leurs rainures 30 au-delà de la surface supérieure de la tablette 12.

Dans une autre utilisation, au moins deux dispositifs 60 sont disposés côte à côte dans un conteneur sans qu'il n'y ait de contacts entre les liens 14 et les éléments de fixation des liens d'un dispositif avec une partie de l'autre dispositif.

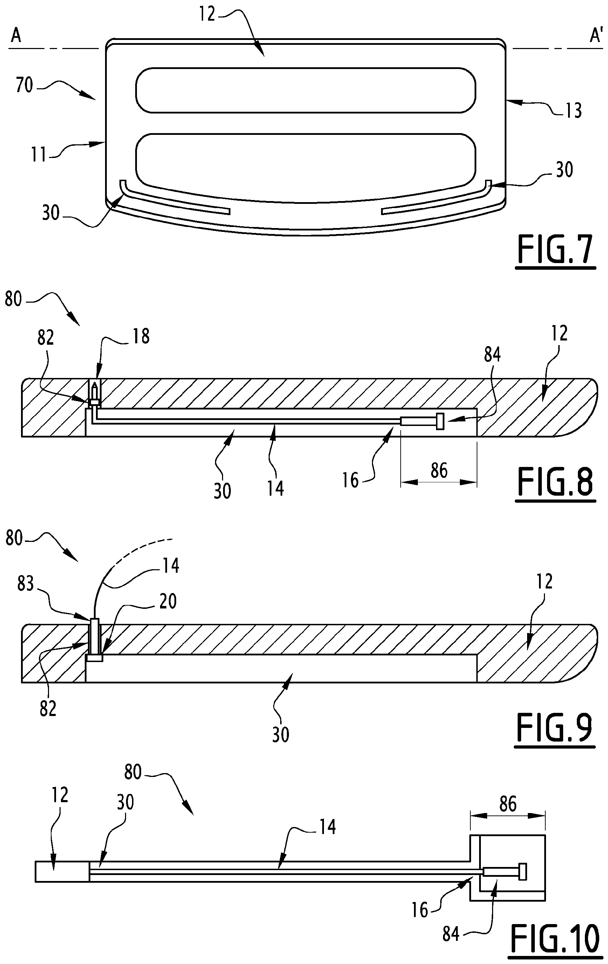

La figure 7 illustre un quatrième dispositif 70 de masquage de véhicule automobile suivant l'invention.

Ce dispositif 70 diffère du dispositif 10 précédemment décrit en ce que chaque rainure 30 s'étend sensiblement parallèlement au bord arrière de la tablette 12. La rainure 30 est courbée. La courbure de la rainure 30 suit la courbure du bord arrière. Elle présente avantageusement un coude et un tronçon d'extrémité s'étendant parallèlement au bord latéral droit ou gauche.

Les figures 8 à 10 illustrent un cinquième dispositif de masquage 80 suivant l'invention.

Ce dispositif 80 diffère du dispositif 10 précédemment décrit en ce que l'extrémité de retenue 16 du lien 14 n'est pas fixée en permanence à la tablette 12. L'extrémité de retenue 16 est liée à un pion d'ancrage 84.

La rainure 30 débouche dans la surface inférieure de la tablette 12.

Ce dispositif 80 diffère également en ce que la tablette 12 définit un passage de circulation 82 du lien 14 et un logement de réception 83 débouchant dans la surface supérieure. Le passage de circulation 82 traverse la tablette 12 depuis la rainure 30 jusqu'au logement supérieur.

La dimension du passage 82 est complémentaire à la section du lien 14. Le lien est monté dans le passage de circulation 82 entre la position de repos et la position d'utilisation.

Dans la position de repos, correspondant au rangement du lien 14, illustrée par les figures 8 et 10, le corps du lien 14 est contenu dans la rainure 30. L'extrémité de retenue 16 du lien 14 est maintenue en position dans une zone de rangement 86 de la rainure 30. L'extrémité libre du lien 14 est contenue dans le logement 83.

Le pion d'ancrage 84 du lien est retenu dans la zone de rangement 86.

Lorsque le pion 84 est disposé dans la zone de rangement 86, le lien 14 est maintenu sous tension. Une butée dans la zone de rangement 86 tient le lien 14 en position.

L'extrémité libre 18 du lien comporte un élément d'accrochage 22 reçu dans le logement 83. Cet élément 22 empêche le passage de l'extrémité libre 18 à travers le passage 82.

Dans l'exemple représenté, la rainure 30 présente un élargissement dans la zone de rangement 86. Cet élargissement permet la prise en main du lien 14 pour débloquer le lien 14 avant de l'extraire de la rainure 30.

Dans la position d'utilisation du lien 14, l'extrémité de retenue 16 a été déplacée par coulissement du lien 14 à travers le passage 85. Elle se trouve dans la zone de retenue 32 de la rainure 30.

Le pion d'ancrage 84 empêche le passage de l'extrémité de retenue 16 du lien 14 à travers le passage de circulation 82. Il fait saillie au-dessus de la surface supérieure de la tablette 12, le reste du lien 14 aussi fait saillie vers le haut hors de la tablette 12.

L'invention qui vient d'être décrite, fournit à l'utilisateur un dispositif simple, peu encombrant et esthétique. L'utilisateur n'est pas gêné par les liens 14 ou les attaches 20, 22, 52 lorsqu'ils sont rangés.

Le dispositif est facile à transporter, car le volume est réduit lorsque les liens 14 sont rangés. Cette réduction de volume permet un stockage facile des tablettes. En outre, plusieurs dispositifs peuvent être rangés côte à côte sans risque de détérioration par marquage.

Dans les exemples décrits précédemment, la surface de tablette dans laquelle la rainure 30 est ménagée est la surface supérieure. En variante, cette surface est une surface latérale de la tablette, définissant par exemple le bord gauche ou droit de la tablette.

En variante, la rainure 30 et ménagée dans la surface inférieure de la tablette 12 afin de limiter l'accumulation de poussière dans la rainure.

En variante, l'organe de support d'objets est un faux plancher de coffre. Dans ce cas le lien 14 est une sangle qui a une fonction de poignée pour aider au déplacement du faux plancher et qui n'est reliée à aucune autre partie du véhicule. Les rainures 30 sont ménagées uniquement sur la surface supérieure du faux plancher.

## Revendications

1. Dispositif de masquage arrière de véhicule automobile (10, 50, 60, 70, 80), du type comprenant :
- un organe de support d'objets (12), destiné à être monté mobile dans le véhicule,
- au moins un lien (14) raccordé à l'organe de support d'objets présentant une extrémité de retenue (16) sur l'organe de support d'objets (12) et une extrémité libre (18),
**caractérisé en ce qu'**une surface de l'organe de support d'objets (12) définit au moins une rainure allongée (30), le lien étant déplaçable entre une position de repos reçue dans la rainure (30) et une position d'utilisation dans laquelle au moins une partie du lien (14) fait saillie hors de la rainure (30) au-delà de la surface de l'organe de support d'objets (12).

2. Dispositif (10, 50, 60, 70, 80) selon la revendication 1, **caractérisé en ce que** dans la position de repos, le lien (14) est contenu entièrement dans la rainure (30), sans faire saillie au-delà de la surface de l'organe de support d'objets (12).

3. Dispositif (10, 50, 60, 70, 80) selon l'une des revendications 1 ou 2, **caractérisé en ce que** l'organe de support d'objets (12) comporte un corps de base (61) délimitant la rainure et un revêtement supérieur (62) fixé sur le corps de base (61) à l'écart de la rainure.

4. Dispositif (10, 50, 60, 70, 80) selon la revendication 3, **caractérisé en ce qu'**il comprend un élément de protection couvrant au moins en partie la rainure (30), l'élément de protection étant formé par une région du revêtement supérieur (62) située en regard de la rainure (30).

5. Dispositif (10, 50, 60, 70, 80) selon la revendication 4, **caractérisé en ce que** l'élément de protection comporte des lèvres latérales (64, 66) s'étendant de part et d'autre de la rainure (30) et une ouverture (68) de passage du lien (14) définie entre les lèvres (64, 66).

6. Dispositif (10, 50, 60, 70, 80) selon l'une quelconque des revendications précédentes, **caractérisé en ce que** l'organe de support d'objets (12) comporte au moins un dispositif de maintien (52) de l'extrémité libre (18) du lien (14), disposé dans la rainure (30).

7. Dispositif (10, 50, 60, 70, 80) selon la revendication 6, **caractérisé en ce que** le dispositif de maintien (52) est totalement reçu dans la rainure, sans faire saillie hors de la rainure (30) au-delà de la surface de l'organe de support d'objets (12).

8. Dispositif (10) selon la revendication 6 ou 7, **caractérisé en ce que** le dispositif de maintien (52) comporte au moins un étranglement défini dans la rainure (30), l'étranglement bloquant par coincement au moins une extrémité (16, 18) du lien (14) dans la position de repos.

9. Dispositif (50, 60, 70, 80) selon l'une quelconque des revendications 6 à 8, **caractérisé en ce que** le dispositif de maintien (52) comporte au moins un pion d'accroche disposé dans la rainure (30).

10. Dispositif (10, 50, 60, 70, 80) selon l'une quelconque des revendications précédentes, **caractérisé en ce que**, dans la position de repos, les extrémités (16, 18) du lien (14) sont contenues dans la rainure (30) sans faire saillie au-delà de la surface de l'organe de support d'objets (12).

11. Dispositif (80) selon l'une quelconque des revendications précédentes, **caractérisé en ce que** le lien (14) est monté coulissant dans l'organe de support d'objets (12) entre la position de repos et la position d'utilisation, l'extrémité de retenue (16) du lien (14) étant déplaçable par rapport à l'organe de support d'objets (12).

12. Procédé de stockage d'au moins un dispositif de masquage arrière de véhicule automobile, **caractérisé en ce qu'**il comporte les étapes suivantes :
- fourniture d'au moins un dispositif (10, 50, 60, 70, 80) selon l'une quelconque des revendications précédentes ;
- rangement du lien (14) dans la rainure (30) dans sa position de repos sans qu'il fasse saillie au-delà-de la surface de l'organe de support d'objets (12).

13. Procédé selon la revendication 12, **caractérisé en ce qu'**il comporte l'étape suivante :
- introduction d'une pluralité de dispositifs (10, 50, 60, 70, 80) dans un conteneur, chaque dispositif (10, 50, 60) comportant un lien (14) rangé dans une rainure (30).

14. Procédé selon la revendication 12 ou 13, **caractérisé en ce qu'**il comporte une étape d'extraction du lien (14) hors de la rainure (30).

## Patentansprüche

1. Vorrichtung zur hinteren Maskierung eines Kraftfahrzeugs (10, 50, 60, 70, 80), des Typs aufweisend:
- ein Organ zum Halten von Objekten (12), das dazu bestimmt ist, in dem Fahrzeug bewegbar montiert zu werden,
- wenigstens ein Verbindungsglied (14), das an das Organ zum Halten von Objekten angeschlossen ist und das ein Ende zum Festhalten (16) an dem Organ zum Halten von Objekten (12) und ein freies Ende (18) aufweist,
**dadurch gekennzeichnet, dass** eine Fläche des Organs zum Halten von Objekten (12) wenigstens eine langgestreckte Rille (30) definiert, wobei das Verbindungsglied zwischen einer Ruheposition, aufgenommen in der Rille (30), und einer Verwendungsposition verlagerbar ist, in welcher wenigstens ein Teil des Verbindungsglieds (14) nach außerhalb der Rille (30) über die Fläche des Organs zum Halten von Objekten (12) hinaus vorsteht.

2. Vorrichtung (10, 50, 60, 70, 80) gemäß Anspruch 1, **dadurch gekennzeichnet, dass** in der Ruheposition das Verbindungsglied (14) vollständig in der Rille (30) aufgenommen ist, ohne über die Fläche des Organs zum Halten von Objekten (12) hinaus vorzustehen.

3. Vorrichtung (10, 50, 60, 70, 80) gemäß einem der Ansprüche 1 oder 2, **dadurch gekennzeichnet, dass** das Organ zum Halten von Objekten (12) einen Basiskörper (61), der die Rille begrenzt, und eine obere Abdeckung (62) aufweist, die an dem Basiskörper (61) befestigt ist in einem Abstand von der Rille.

4. Vorrichtung (10, 50, 60, 70, 80) gemäß Anspruch 3, **dadurch gekennzeichnet, dass** sie aufweist ein Schutzelement, das wenigstens einen Teil der Rille (30) abdeckt, wobei das Schutzelement von einem Bereich der oberen Abdeckung (62) gebildet ist, der der Rille (30) gegenüberliegt.

5. Vorrichtung (10, 50, 60, 70, 80) gemäß Anspruch 4, **dadurch gekennzeichnet, dass** das Schutzelement laterale Lippen (64, 66), die sich beidseitig der Rille (30) erstrecken, und eine Durchgangsöffnung (68) für das Verbindungsglied (14) aufweist, die zwischen den Lippen (64, 66) definiert ist.

6. Vorrichtung (10, 50, 60, 70, 80) gemäß irgendeinem der vorhergehenden Ansprüche, **dadurch gekennzeichnet, dass** das Organ zum Halten von Objekten (12) wenigstens eine Vorrichtung zum Festhalten (52) des freien Endes (18) des Verbindungsglieds (14) hat, die in der Rille (30) angeordnet ist.

7. Vorrichtung (10, 50, 60, 70, 80) gemäß Anspruch 6, **dadurch gekennzeichnet, dass** die Vorrichtung zum Festhalten (52) vollständig in der Rille aufgenommen ist, ohne nach außerhalb der Rille (30) über die Fläche des Organs zum Halten von Objekten (12) hinaus vorzustehen.

8. Vorrichtung (10) gemäß Anspruch 6 oder 7, **dadurch gekennzeichnet, dass** die Vorrichtung zum Festhalten (52) wenigstens eine Engstelle aufweist, die in der Rille (30) definiert ist, wobei die Engstelle via Einklemmen wenigstens ein Ende (16, 18) des Verbindungsglieds (14) in der Ruheposition blockiert.

9. Vorrichtung (50, 60, 70, 80) gemäß irgendeinem der Ansprüche 6 bis 8, **dadurch gekennzeichnet, dass** die Vorrichtung zum Festhalten (52) wenigstens ein Festhaltestück aufweist, das in der Rille (30) angeordnet ist.

10. Vorrichtung (10, 50, 60, 70, 80) gemäß irgendeinem der vorhergehenden Ansprüche, **dadurch gekennzeichnet, dass** in der Ruheposition die Enden (16, 18) des Verbindungsglieds (14) in der Rille (30) aufgenommen sind, ohne über die Fläche des Organs zum Halten von Objekten (12) hinaus vorzustehen.

11. Vorrichtung (80) gemäß irgendeinem der vorhergehenden Ansprüche, **dadurch gekennzeichnet, dass** das Verbindungsglied (14) in dem Organ zum Halten von Objekten (12) verschiebbar montiert ist zwischen der Ruheposition und der Verwendungsposition, wobei das Ende zum Festhalten (16) des Verbindungsglieds (14) bezüglich des Organs zum Halten von Objekten (12) verlagerbar ist.

12. Verfahren zur Aufbewahrung wenigstens einer Vorrichtung zur hinteren Maskierung eines Kraftfahrzeugs, **dadurch gekennzeichnet, dass** es die folgenden Schritte aufweist:
- Bereitstellung wenigstens einer Vorrichtung (10, 50, 60, 70, 80) gemäß irgendeinem der vorhergehenden Ansprüche,
- Unterbringung des Verbindungsglieds (14) in der Rille (30) in seiner Ruheposition, ohne dass es über die Fläche des Organs zum Halten von Objekten (12) hinaus vorsteht.

13. Verfahren gemäß Anspruch 12, **dadurch gekennzeichnet, dass** es den folgenden Schritt aufweist:
- Einführung einer Mehrzahl von Vorrichtungen (10, 50, 60, 70, 80) in einen Behälter, wobei jede Vorrichtung (10, 50, 60) ein Verbindungsglied (14) aufweist, das in einer Rille (30) untergebracht ist.

14. Verfahren gemäß Anspruch 12 oder 13, **dadurch gekennzeichnet, dass** es einen Schritt der Entnahme des Verbindungsglieds (14) aus der Rille (30) heraus aufweist.

## Claims

1. A rear concealment device (10, 50, 60, 70, 80) for a motor vehicle, of the type comprising:
- an object support member (12) intended to be mounted in a mobile manner in said vehicle;
- at least one linkage element (14) connected to said object support member having a retention end (16) on said object support member (12) and a free end (18),
**characterised in that** a surface of said object support member (12) defines at least one elongated groove (30), said linkage element being movable between a rest position inside said groove (30) and an operating position, in which at least part of said linkage element (14) protrudes outside of said groove (30) beyond said surface of said object support member (12).

2. The device (10, 50, 60, 70, 80) according to claim 1, **characterised in that** in the rest position said linkage element (14) is fully contained inside said groove (30), without protruding beyond said surface of said object support member (12).

3. The device (10, 50, 60, 70, 80) according to any one of claims 1 or 2, **characterised in that** said object support member (12) comprises a base body (61) demarcating said groove and an upper cover (62) fixed onto said base body (61) at a distance from said groove.

4. The device (10, 50, 60, 70, 80) according to claim 3, **characterised in that** it comprises a protective element at least partly covering said groove (30), said protective element being formed by a region of said upper cover (62) located opposite said groove (30).

5. The device (10, 50, 60, 70, 80) according to claim 4, **characterised in that** said protective element comprises lateral lips (64, 66) extending on either side of said groove (30) and an opening (68) for the passage of said linkage element (14), which opening (68) is defined between said lips (64, 66).

6. The device (10, 50, 60, 70, 80) according to any one of the preceding claims, **characterised in that** said object support member (12) comprises at least one device (52) for holding said free end (18) of said linkage element (14), which device (52) is disposed inside said groove (30).

7. The device (10, 50, 60, 70, 80) according to claim 6, **characterised in that** said holding device (52) is fully housed inside said groove, without protruding outside of said groove (30) beyond said surface of said object support member (12).

8. The device (10) according to claim 6 or 7, **characterised in that** said holding device (52) comprises at least one restriction defined inside said groove (30), said restriction blocking, by wedging, at least one end (16, 18) of said linkage element (14) in the rest position.

9. The device (50, 60, 70, 80) according to any one of claims 6 to 8, **characterised in that** said holding device (52) comprises at least one attachment pin disposed inside said groove (30).

10. The device (10, 50, 60, 70, 80) according to any one of the preceding claims, **characterised in that**, in the rest position, said ends (16, 18) of said linkage element (14) are contained inside said groove (30) without protruding beyond said surface of said object support member (12).

11. The device (80) according to any one of the preceding claims, **characterised in that** said linkage element (14) is mounted so as to slide inside said object support member (12) between the rest position and the operating position, said retention end (16) of said linkage element (14) being movable relative to said object support member (12).

12. A method for stowing at least one rear concealment device for a motor vehicle, **characterised in that** it comprises the following steps of:
- providing at least one device (10, 50, 60, 70, 80) according to any one of the preceding claims;
- stowing said linkage element (14) inside said groove (30) in its rest position without it protruding beyond said surface of said object support member (12).

13. The method according to claim 12, **characterised in that** it comprises the following step of:
- introducing a plurality of devices (10, 50, 60, 70, 80) into a container, each device (10, 50, 60) comprising a linkage element (14) stowed inside a groove (30).

14. The method according to claim 12 or 13, **characterised in that** it comprises a step of extracting said linkage element (14) outside of said groove (30).
